# EUROPÄISCHE PATENTSCHRIFT

(11) **EP 0 313 937 B1**
(45) Veröffentlichungstag und Bekanntmachung des Hinweises auf die Patenterteilung: **17.03.1993**
(21) Anmeldenummer: 88117106.0
(22) Anmeldetag: 14.10.1988
(51) Int. Cl.: G11B 23/023

(54) **Verpackung für Aufzeichnungsträger**
Packaging for record carrier
Emballage pour support d'enregistrement

(30) Priorität: 27.10.1987 DE 3736239
(43) Veröffentlichungstag der Anmeldung: 03.05.1989
(73) Patentinhaber: Wolf, Hans-Joachim, D-75447 Sternenfels (DE)
(72) Erfinder: Wolf, Hans-Joachim, D-75447 Sternenfels (DE)
(74) Vertreter: Frank, Gerhard, Dipl.-Phys.

(56) Entgegenhaltungen:
- EP-A- 0 081 023
- EP-A- 0 112 436
- EP-A- 0 143 609
- EP-A- 0 221 749
- DE-A- 3 414 903
- DE-U- 8 714 258
- GB-A- 2 154 550
- GB-A- 2 192 614
- US-A- 4 496 048

## Beschreibung

Die Erfindung betrifft eine Verpackung für flache Aufzeichnungsträger, die mittels Scharniers klappbar ausgebildet ist und den Aufzeichnungsträger vollständig gehäuseartig umschließt, wobei das Gehäuse aus drei separaten Bauteilen, nämlich einem Oberteil, einem Unterteil und einem Halterahmen aufgebaut ist, so daß innerhalb dieses Gehäuses der Halterahmen zur Aufnahme des Aufzeichnungsträgers so gehalten ist, daß er beim Lösen eines Verschlusses den Aufzeichnungsträger freigibt.

Eine derartige Verpackung ist aus der EP-A-0221749 oder DE-A-3414903 bekannt.

Eine ähnliche Verpackung, die aber nicht aus separaten Teilen besteht, ist aus der GB-A-2154550 bekannt, und besteht aus einem Kunstsoffteil aus Polypropylen mit zwei parallelen derart "geschwächten" Linien, daß sie als Scharnier dienen und ein Rückenteil zwischen sich auf dem Kunststoffteil definieren; die seitlichen Bereiche des Kunststoffzuschnittes bilden dann Ober- und Unterteil eines Gehäuses.

Zur Bildung einer gehäuseartigen, seitlich abgeschlossenen Verpackung und zur Verstärkung des Ober- und Unterteils dienen U-förmig umlaufende Kunststoffleisten, die auf die Randbereiche von Ober- und Unterteil aufgebracht sein können. Zur Aufnahme des Aufzeichnungsträgers dient ein am Rückenteil angebrachter Halterahmen.

Infolge der flächigen Anbringung des Halterahmenrückens an das Rückenteil des Kunststoffteiles zwischen den Scharnierlinien tritt beim Aufklappen von Ober- und Unterteil ein "Mitnahmeeffekt" des Halterahmens auf, insofern, als dieser mehr oder weniger weit aus dem unteren, vom Unterteil und zugehörigem Rahmen gebildeten Gehäuseteil herausschwenkt. Dieser beabsichtigte Effekt hängt zwangsläufig wesentlich vom Gewicht des Aufzeichnungsträgers, der Handhabung durch den Benutzer und von den elastischen Eigenschaften des Kunststoffteiles im Bereich der Scharnierlinien ab: bei weichem Kunststoffmaterial ist der beschriebene "Mitnahmeeffekt" zwangsläufig nur schwach ausgebildet, so daß es einer gezielten Handhabung durch den Benutzer bedarf, um den Halterahmen mit dem Aufzeichnungsträger aus dem unteren Gehäuseteil herauszuheben. Bei härterem Kunststoffmaterial wird dieser "Mitnahmeeffekt" zwar stärker ausgebildet sein, das entsprechend sprödere Material wird aber auch eher ermüden und die Gebrauchsdauer der Verpackung sinkt.

Da der "Mitnahmeeffekt" also in allen Fällen wesentlich von der Materialauswahl des Kunststoffteiles bestimmt wird, wird er folglich auch abhängig von den äußeren Parametern, die das Verhalten von Kunststoffen beeinflussen, wie z.B. Temperatur oder Feuchtigkeit, und die ebenfalls die "Lebensdauer" der Scharnierlinien beeinflussen.

All diese Einflüsse und Wechselwirkungen bewirken, daß eine definierte Freigabeposition nicht gegeben ist, wenn die Verpackung einmal geöffnet ist.

Das Öffnen der vorbekannten Verpackung wird dadurch bewirkt, daß die umlaufenden Rahmen zumindest stellenweise so profiliert sind, daß sie ineinandergreifen, so daß ein durch Reibschluß bewirkter Rastverschluß erzielt wird. Die Gestaltung dieses Rastverschlusses wiederum kann nicht unabhängig sein von der Wahl des Materials der Kunststoffteile und muß die Rückfederungskraft der Scharnierlinien berücksichtigen, die versucht, das Gehäuse aufzuklappen. Unabhängig davon bedarf es jedoch zunächst eines einleitenden Öffnungsvorganges dieses Rastverschlusses mit beiden Händen, bevor dann in der oben beschriebenen Art das Gehäuse mehr oder weniger selbständig, teilweise oder vollständig, den Aufzeichnungsträger in einer geeigneten Entnahmeposition freigibt.

Aus der DE-A1 32 47 796 ist ebenfalls eine Aufbewahrungsvorrichtung für scheibenförmige Aufzeichnungsträger vorbekannt, es handelt sich jedoch hier um eine Mehrfach-Verpackung, bei der ein fächerartiger Ausschwenkvorgang mittels einer aufwendigen und komplizierten Mechanik bewirkt wird. Sämtliche Bauteile müssen relativ stabil ausgeführt sein, was einen beträchtlichen Materialaufwand bedingt, beispielsweise um die beim Ausschwenken auftretenden großen Drehmomente zu beherrschen. Letztlich ist der konstruktive Aufwand, der hier getrieben werden muß, bedingt durch die kinematisch ungünstige Anordnung einer Schraubendruckfeder seitlich vom Gehäuse.

Der Einsatz eines separaten elastischen Elementes beim Gegenstand dieser Druckschrift verbessert zwar gegenüber dem Gegenstand der GB-A-2154550 das Ausschwenkverhalten hinsichtlich einer definierten Entnahmeposition, die Lösung ist aber erkennbar unverhältnismäßig aufwendig und teuer zur Verwendung bei einer Einfach-Verpackung.

Es ist daher Aufgabe der Erfindung, die gattungsgemäße Verpackung derart weiterzubilden, daß ein Material eingesetzt werden kann, das nach langer Gebrauchsdauer auch bei wechselnden Einsatztemperaturen eine gleichbleibende Freigabeposition, insbesondere ein gleichbleibender Öffnungswinkel zur Entnahme des Aufzeichnungsträgers gewährleistet ist, wobei das Spritzgußwerkzeug zur Herstellung der Verpackung einfach aufgebaut sein soll, wodurch eine einfachere und bequemere Handhabung der Verpackung erreicht werden soll.

Erfindungsgemäß wird diese Aufgabe dadurch gelöst, daß an mindestens einem der drei Bauteile ein zungen- oder lamellenartiges Federelement unmittelbar angeformt ist, wobei sich dieses Federelement mit seinem freien Ende auf dem gegenüberliegenden Bauteil oder dem in der Mitte liegenden Aufzeichnungsträger zum selbsttätigen Aufklappen federnd abstützt.

Für die Anordnung eines solchen Federelementes sind vielfache Möglichkeiten denkbar, entscheidend ist, daß dieses Federelement eine Kraftwirkung zumindest zwischen einem der Verpackungsteile (Oberteil oder Unterteil) einerseits und dem Aufzeichnungsträger ausübt, derart, daß nach dem Lösen des Verschlusses, beispielsweise eines Schnappverschlusses, dieses Federelement zumindest ein Verpackungsteil vom Aufzeichnungsträger bzw. vom Halterahmen wegdrückt und diesen zusammen mit dem Aufzeichnungsträger von einem der Verpackungsteile abhebt. Dies ermöglicht eine einfache Einhand-Bedienung der Verpackung.

Vorteilhafterweise ist jeweils mindestens eines dieser Federelemente zwischen Oberteil und Halterahmen einerseits und Unterteil und Halterahmen andererseits vorgesehen, die etwa die gleiche Kraftwirkung enthalten, so daß beim Lösen des Verschlusses die Verpackung automatisch bis zu einem durch die Spannkraft der Federelemente vorbestimmbaren Winkel öffnet und der Halterahmen mit dem Aufzeichnungsträger etwa in der Ebene der Winkel-halbierenden des erreichten Öffnungswinkels zwischen Oberteil und Unterteil positioniert wird. Bei dieser Stellung wird die Vorderflanke des Aufzeichnungsträgers vollständig von den Seitenwandungen von Ober- und Unterteil befreit, so daß der Aufzeichnungsträger einfach aus dem Halterahmen herausgezogen werden kann. Dies vereinfacht insofern auch die Handhabung weiter, als mit der einen Hand, die die Verpackung hält, der Verschluß betätigt wird, ohne daß der Zugriffsbereich für die Kassette dadurch eingeschränkt wird.

In einer weiteren Ausgestaltung ist vorgesehen, daß der Halterahmen in einer gemeinsamen Achse des Scharniers von Oberteil und Unterteil schwenkbar gehalten ist.

Eine weitere Ausgestaltung sieht schließlich vor, daß das/die Federelement (e) aus einem oder mehreren Streifen gebildet ist/sind, die S-förmig zwischen Oberteil und Halterahmen und/oder zwischen Unterteil und Halterahmen liegen.

Die S-Formgebung ist insbesondere deswegen von Vorteil, weil beim Aufklappen der Verpackung das freie Ende des zungen- oder lamellenartigen Federelementes auf dem gegenüberliegenden Verpackungsteil gleitet, die Abbiegung des Federelementes in seinen Endbereich verhindert Beschädigungen des gegenüberliegenden Gehäuseteils beim Gleitvorgang.

Der Halterahmen kann weitgehend vollflächig den hinteren Teil der Kassette überdecken, er kann aber auch auf seinen notwendigsten Bestandteil reduziert werden, beispielsweise schienenartige Führungsflächen für den Einschub des Aufzeichnungsträgers, beispielsweise der Audiokassette, und Angriffsflächen für die Federelemente.

Zwei Ausführungsbeispiele der erfindungsgemäßen Verpackung werden anhand von Zeichnungen näher erläutert, es zeigen:

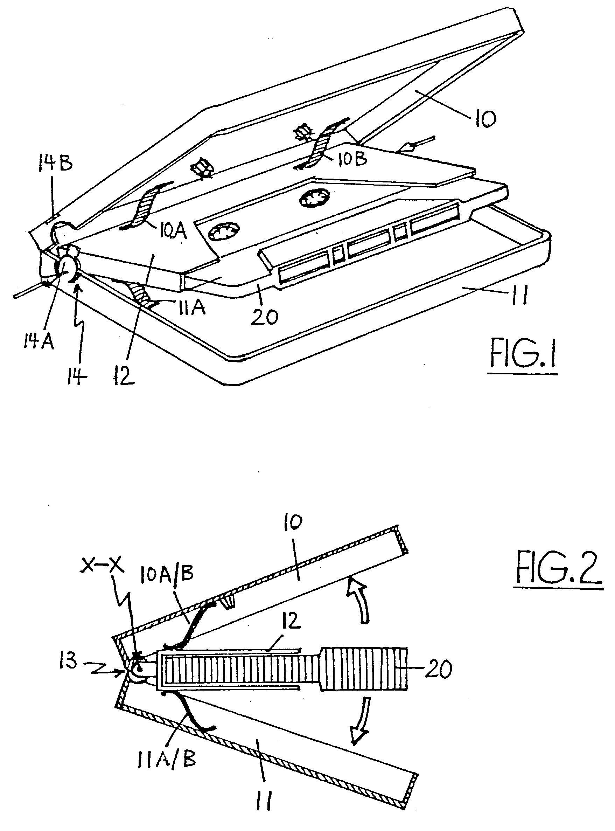

- Figur 1:: Eine perspektivische Darstellung des ersten Ausführungsbeispiels der Verpackung mit eingeschobener Audio-Kassette,
- Figur 2:: einen Querschnitt durch die aufgeklappte Verpackung mit eingelegter Kassette, gemäß Figur 1, und
- Figur 3:: eine Explosionsdarstellung des zweiten Ausführungsbeispiels ohne Kassette.

Beim dargestellten ersten Ausführungsbeispiel besteht die Verpackung aus einem Oberteil 10 und einem Unterteil 11, die über ein Scharnier 13 in bekannter Weise klappbar miteinander verbunden sind, so daß sie die Kassette 20 im geschlossenen Zustand vollständig umschließen.

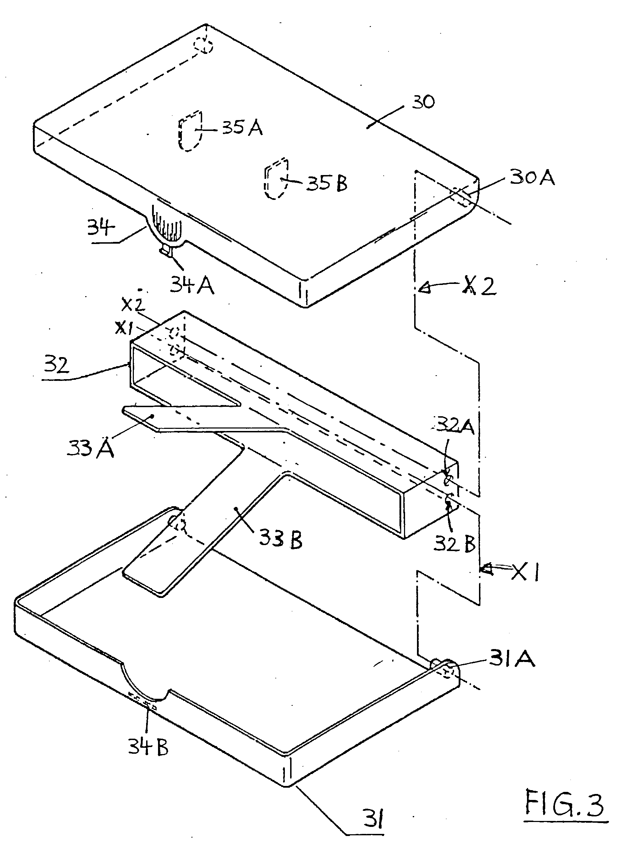

An der Scharnierachse X-X des Scharniers 13 ist weiterhin ein Halterahmen 12 gelagert, der zwischen Oberteil 10 und Unterteil 11 angeordnet ist. Der Halterahmen 12 kann somit bei geöffneter Verpackung prinzipiell jede Winkelstellung zwischen Oberteil 10 und Unterteil 11 einnehmen. Dieser Halterahmen 12 weist vorne eine Öffnung auf, die etwa dem Querschnitt einer handelsüblichen Kassette 20 entspricht, so daß die Kassette 20 schubladenähnlich in den Halterahmen 12 eingesteckt werden kann und von diesem gehalten wird. Zwischen dem Oberteil 10 und dem Halterahmen 12 einerseits und dem Unterteil 11 und dem Halterahmen 12 andererseits sind Federelemente 10A,10B bzw. 11A,11B angeordnet, die bei geschlossener Verpackung zusammengedrückt werden, so daß sei bei Lösen eines seitlich angeordneten Verschlusses 14 Oberteil 10 und Unterteil 11 um einen bestimmten Öffnungswinkel auseinanderklappen und gleichzeitig den Halterahmen 12 mit der Kassette 20 in eine Winkelposition bringen, die etwa der Winkelhalbierenden zwischen dem Öffnungswinkel zwischen Oberteil 10 und Unterteil 11 entspricht, so daß die Kassette 20 etwa die in Figur 2 dargestellte Position einnimmt. Als Federelemente 10A...11B sind im dargestellten Ausführungsbeispiel S-förmig abgebogene Streifen, beispielsweise aus Kunststoff oder Metall vorgesehen, deren eines Ende entweder am Halterahmen oder am Ober- bzw. Unterteil fixiert ist, wogegen ihr anderes Ende auf dem jeweils gegenüberliegenden Bauteil frei gleiten kann.

Der Verschluß 14 ist beim dargestellten Ausführungsbeispiel von einem elastischen Teil 14A am Unterteil 11 gebildet, dessen nach oben gerichtete Zunge in eine entsprechende Vertiefung oder Ausformung 14B des Oberteils einrasten kann. Es versteht sich von selbst, daß eine Vielzahl von derartigen Schnappverschlüssen entweder an den Seitenwandungen oder den Stirnwandungen von Ober- und Unterteil verwendet werden können, grundsätzlich müssen sie lediglich so bemessen sein, daß das von ihnen ausgeübte Haltemoment im geschlossenen Zustand der Verpackung größer ist als das von den Federelementen 10A...11B bezogen auf die Scharnierachse X-X ausgeübte Öffnungsmoment.

Beim zweiten Ausführungsbeispiel gemäß der Figur 3 ist der grundsätzliche Aufbau der Verpackung der gleiche, nämlich ein Halterahmen 32 ist zwischen einem Oberteil 30 und einem Unterteil 31 schwenkbar gehalten. Bei diesem Ausführungsbeispiel sind zwei Scharnierachsen X1 und X2 im Halterahmen 32 vorgesehen, hierbei ist angedeutet, daß ein am Oberteil 30 nach innen angespritzter Zapfen 30A in eine entsprechende Bohrung 32A des Halteteils eingreift bzw. ein entsprechender Zapfen 31A des Unterteils 31 in eine Bohrung 32B des Halterahmens 32. (Die entsprechenden gegenüberliegenden Bauteile sind aus Gründen der Klarheit nicht näher bezeichnet).

Im Unterschied zum ersten Ausführungsbeispiel sind hier keine separaten Streifen als Federelemente vorgesehen, sondern zwei Streifen 33A,33B, die am Halterahmen 32 angeformt sind, insbesondere einstückig mit diesem ausgebildet sind und sich scherenartig nach außen öffnen, so daß sie bei geschlossener Verpackung versuchen,Oberteil 30 und Unterteil 31 auseinanderzudrücken.

Dies wird beim Ausführungsbeispiel der Figur 3 durch ein an der Stirnseite angeordnetes Verschlußelement 34 verhindert, das über eine Rastnase 34A verfügt, die in eine korrespondierende Nut 34B im Unterteil 31 einrastet. Beim Fingerdruck auf die senkrecht gestrichelte dargestellte Fläche des Verschlußelementes 34 weicht auch die Rastnase 34A nach hinten zurück aus der Nut 34B heraus, so daß dann unter der Wirkung der Federelemente 33A,33B die Verpackung aufschnappt und die im Halterahmen 32 (in Figur 3 nicht dargestellte) Kassette zur Entnahme freigibt.

Im Oberteil 30 der Kassette sind Haltenasen 35A,35B ausgebildet, die in den Achsbereich der Audio-Kassette eingreifen und diese fixieren.

Durch die zungenartige Ausbildung der Federelemente 33A,33B entsteht kein besonderer Materialaufwand. Zur Materialeinsparung ist es auch denkbar, an den Bereichen, wo der Halterahmen 32 vollflächig ausgebildet ist, entsprechende Aussparungen im Ober- und/oder Unterteil 30/31 vorzusehen.

## Patentansprüche

1. Verpackung für Aufzeichnungsträger (20), die mittels Scharniers (13) klappbar ausgebildet ist und den Aufzeichnungsträger vollständig gehäuseartig umschließt, wobei das Gehäuse aus drei separaten Bauteilen, nämlich einem Oberteil (10), einem Unterteil (11) und einem Halterahmen (12) aufgebaut ist, so daß innerhalb dieses Gehäuses der Halterahmen (12) zur Aufnahme des Aufzeichnungsträgers (20) so gehalten ist, daß er beim Lösen eines Verschlusses (14) den Aufzeichnungsträger freigibt,
dadurch gekennzeichnet, daß an mindestens einem der drei Bauteile ein zungen- oder lamellenartiges Federelement (10A,10B,11A,11B) unmittelbar angeformt ist, wobei sich dieses Federelement mit seinem freien Ende auf dem gegenüberliegenden Bauteil oder dem in der Mitte liegenden Aufzeichnungsträger (20) zum selbsttätigen Aufklappen federnd abstützt.

2. Verpackung nach Anspruch 1, dadurch gekennzeichnet, daß der Halterahmen (12) in einer gemeinsamen Achse (X-X) des das Oberteil (10) mit dem Unterteil (11) verbindenden Scharniers (13) schwenkbar gehalten ist.

3. Verpackung nach Anspruch 1, dadurch gekennzeichnet, daß das/die Federelement(e) (10A...11B) aus einem oder mehreren Streifen gebildet ist/sind, die S-förmig zwischen Oberteil (10) und Halterahmen (12) und/oder zwischen Unterteil (11) und Halterahmen (12) liegen.

4. Verpackung nach Anspruch 1, dadurch gekennzeichnet, daß der Verschluß (14) mindestens ein zwischen den Randseiten von Ober- und Unterteil (10,11) wirkender Schnappverschluß (14) ist, bei dem ein elastisches Teil (14A) in eine korrespondierende Ausformung (14B) einrastet.

## Claims

1. Case for a recording carrier (20) which is adapted to be hingeable by means of hinge (13) and completely surrounds the recording carrier in a housing-like manner, the housing comprising three separate component parts, namely an upper portion (10), a lower portion (11) and a retaining frame (12), so that the retaining frame (12) for receiving the recording carrier (20) is so retained internally of said housing that it releases the recording carrier upon the release of a closure means (14), characterised in that a tongue-like or fin-like resilient element (10A, 11B, 11A, 11B) is fitted directly on at least one of the three component parts, the free end of such resilient element being resiliently supported on the oppositely situated component part or on the centrally situated recording carrier (20) for the automatic pivotal movement.

2. Case according to claim 1, characterised in that the retaining frame (12) is pivotably retained in a common axis (X-X) of the hinge (13), which connects the upper portion (10) to the lower portion (11).

3. Case according to claim 1, characterised in that the resilient element(s) (10A...11B) is (are) formed from one or more strips which lie in an S-shaped manner between upper portion (10) and retaining frame (12) and/or between lower portion (11) and retaining frame (12).

4. Case according to claim 1, characterised in that the closure means (14) is at least one snap closure (14), which operates between the edges of the upper and lower portions (10, 11), a resilient member (14A) engaging in a corresponding recess (14B).

## Revendications

1. Emballage pour support d'enregistrement (20), qui est réalisé pivotant au moyen d'une charnière (13) et enferme complètement le support d'enregistrement à la manière d'un boîtier, dans lequel le boîtier est formé de trois parties de construction séparées, à savoir une partie supérieure (10), une partie inférieure (11) et un cadre de maintien (12), en sorte que le cadre de maintien (12) pour le logement du support d'enregistrement (20) est maintenu de telle manière qu'il libère le support d'enregistrement lors du déverrouillage d'une fermeture (14),
caractérisé en ce qu'un organe ressort (10A,10B,11A,11B) en forme de languette ou de lamelle est formé directement sur l'un au moins des trois éléments de construction en sorte que cet organe ressort s'appuie élastiquement, par son extrémité libre, sur la pièce de construction opposée ou sur le support d'enregistrement (20) se trouvant au milieu, pour une ouverture automatique.

2. Emballage selon la revendication 1, caractérisé en ce que le cadre de maintien (12) est monté pivotant autour d'un axe commun (X-X) de la charnière (13) reliant la partie supérieure (10) avec la partie inférieure (11).

3. Emballage selon la revendication 1, caractérisé en ce que le(s) organes(s) ressort(s) (10A...11B) est/sont formé(s) d'une ou plusieurs bandes qui s'étendent en forme de S entre la partie supérieure (10) et le cadre de maintien (12) et/ou entre la partie inférieure (11) et le cadre de maintien (12).

4. Emballage selon la revendication 1, caractérisé en ce que la fermeture (14) est au moins une fermeture à déclic (14) agissant entre les côtés marginaux des parties supérieure et inférieure (10,11), dans laquelle une pièce élastique (14A) s'engage dans un logement correspondant (14B).
